# EUROPEAN PATENT SPECIFICATION

(11) **EP 3 820 937 B1**
(45) Date of publication and mention of the grant of the patent: **28.08.2024**
(21) Application number: 19742949.1
(22) Date of filing: 02.07.2019
(51) Int. Cl.: C08K 3/36, C08K 5/47, C08K 3/06, B60C 1/00, B60C 11/03, B60C 11/11, B60C 11/12

(54) **TRUCK AND BUS RADIAL PNEUMATIC TYRE OF A DRIVING WHEEL**
LKW- UND BUS-RADIALLUFTREIFEN EINES ANTRIEBSRADES
PNEUMATIQUE RADIAL D'UNE ROUE MOTRICE DE CAMION ET BUS

(30) Priority: 09.07.2018 IT 201800007028
(43) Date of publication of application: 19.05.2021
(73) Proprietor: Bridgestone Europe NV/SA, 1930 Zaventem (BE)
(72) Inventor: FORTE, Gianluca, 00128 Roma (IT); CAVALIERE, Alessio, 00128 Roma (IT)
(74) Representative: Marchetti, Alessio
(86) International application number: PCT/IB2019/055636
(87) International publication number: WO 2020/012294

(56) References cited:
- EP-A1- 0 738 613
- EP-A1- 0 972 799
- WO-A1-2017/106493
- JP-A- 2011 098 622

## Description

The present invention relates to a tread of TBR pneumatic tyres of driving wheels.

The abbreviation "TBR" is an acronym of the English wording "Truck & Bus Radial" tyre.

Known TBR pneumatic tyres are described in WO 2017/106493 A and JP2011098622 A.

As is to be immediately expected, for TBR pneumatic tyres a significantly higher level of wear resistance is necessarily required compared to pneumatic tyres for passengers. Indeed, TBR pneumatic tyres must be prepared for being subjected both to very high loads and to traveling over rough roads.

For some time now, also in the field of TBR pneumatic tyres, part of the research is aimed at improving the performance thereof in terms of rolling resistance.

As is known to persons skilled in the art, a solution for improving the rolling resistance of a pneumatic tyre tread is in relation to an increase in the amount of silica within the relative rubber compound.

However, an increase in the amount of silica as a substitute for the carbon black within the compound necessarily results in a decrease in the wear resistance and in the resistance to the propagation of cracks within the tread, with negative consequences concerning the service life of the pneumatic tyre.

Obviously, for TBR pneumatic tyres a deterioration cannot possibly be accepted in terms of wear resistance and crack propagation by virtue of an improvement in terms of rolling resistance.

Furthermore, the aforementioned disadvantages in terms of wear resistance and the propagation of cracks are more evident wherein they concern the pneumatic tyres of driving wheels.

The driving wheels are the wheels of a means of locomotion whereto the force is transferred that is released by the engine in the form of torque by means of the propeller shaft and the differential. The driving wheels are, therefore, connected to the engine and allow the vehicle to move as a result of the frictional forces exchanged between the wheels and the road. As may seem immediate to a person skilled in the art, insofar as they are subject to high torque and at a high slip ratio, driving wheels have a wear dynamic that is different than the wheels of the trailer.

The need was therefore felt to have a solution for the tread of the TBR pneumatic tyres of driving wheels that would make it possible to ensure an improvement in terms of rolling resistance, without thereby worsening the wear resistance and/or compromising the duration of the life of the pneumatic tyre as a whole.

The inventors of the present invention have surprisingly found that if a tread has the combination of a design with particular slip requirements along with a particular composition of the compound of origin, it is possible to obtain an improvement in terms of rolling resistance without incurring a deterioration in terms of wear resistance and the durability of the pneumatic tyre.

The object of the present invention is a TBR pneumatic tyre of a driving wheel, as defined in claim 1, comprising a tread having a design such as to give an average tread slip of less than 0.5 mm and a slip range for the tread points of between 0.07 mm and 1.17 mm; these slip parameters being measured under the condition of a rolling speed of 0.012 Km/h, of a vertical load equal to the nominal load of the pneumatic tyre, of torque in Nm equal to half of the nominal load of the pneumatic tyre, of lateral slip angles and camber angles equal to zero; said pneumatic tyre being characterized in that said tread is manufactured with a compound comprising a cross-linkable unsaturated chain polymer base comprising from 40 to 80% by weight of a styrene-butadiene rubber (SBR), a filler comprising from 40 to 80% by weight of silica and a vulcanization system.

Here and hereinafter with the term "tread" it is intended the set comprising the "cap" portion and the "base" portion of the tread. In fact, many pneumatic tyres have a tread composed of the combination of the aforementioned portions, wherein the respective compounds thereof differ from one another and wherein the relative thickness thereof varies depending upon the type of pneumatic tyre concerned. In this way, it is understood that the present invention can be applied either only to the compound in relation to the cap portion or to both of the compounds respectively in relation to the cap portion and the base portion.

Here and hereinafter, the term "cross-linkable unsaturated-chain polymer base" refers to any natural or synthetic non-cross-linked polymer capable of assuming all of the chemical-physical and mechanical characteristics typically assumed by elastomers after cross-linking (vulcanization) with sulfur-based systems.

Here and hereinafter, vulcanization system refers to a complex of ingredients comprising at least sulfur and accelerating compounds, that in the preparation of the compound are added in a final mixing step and have the purpose of promoting the vulcanization of the polymer base once the compound is subjected to a vulcanization temperature.

Preferably, the cross-linkable unsaturated chain polymer base comprises from 50 to 70% by weight of a styrene-butadiene rubber (SBR).

Preferably, the filler comprises from 50 to 70% by weight of silica and a vulcanization system.

Preferably, the polymer base comprises natural rubber.

Preferably, the filler comprises carbon black.

The following are purely illustrative and non-limiting exemplary embodiments shown with the help of the annexed figure, which illustrates a tread portion.

### EXAMPLES

Four pneumatic tyres were manufactured, each of which has a different combination of tread design and composition of the tread compound itself.

In particular, three comparison pneumatic tyres (A - C) and a pneumatic tyre according to the invention (D) were manufactured. The comparison tyre A has the combination of a design with slip characteristics that are greater than those provided for by the present invention and a compound composition that is different than that according to the present invention and typical of a tread compound for TBR pneumatic tyres; the comparison pneumatic tyre B has the combination of a design with slip characteristics that are greater than those provided for by the present invention and a compound composition according to the present invention; the comparison pneumatic tyre C has the combination of a design with slip characteristics according to the present invention and a compound composition that is different than that according to the present invention and typical of a tread compound for TBR tyres. The pneumatic tyre according to the invention D has, in comparison, the combination of a design with slip characteristics according to the present invention and a compound composition according to the present invention.

The pneumatic tyres C and D have a tread pattern as illustrated in the annexed figure. In particular the design of the pneumatic tyres C and D provides that the distance A is 1.5 mm; the distance B is 70.0 mm; the distance C is 0.55 mm.

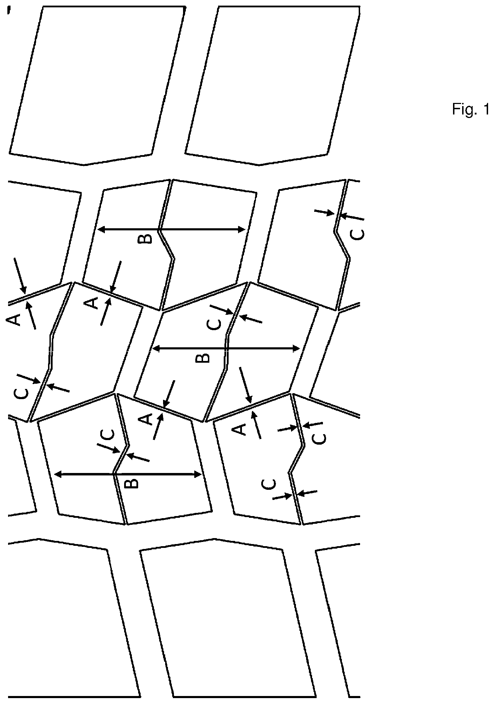

The tread pattern shown in the figure confers a slip value according to that stated within the accompanying independent claim in the event wherein: the distance A is between 1.0 and 2.0 mm; the distance B is between 60.0 and 80.0 mm; the distance C is between 0.40 and 0.70 mm.

Herebelow, the procedure is given for the preparation of the compounds described in the examples. This procedure does not represent a limitation for the present invention.

### - preparation of the compounds -

### (1^{st} mixing step)

Before the start of the mixing, a mixer with tangential rotors and an internal volume of between 230 and 270 liters was loaded with the ingredients listed in Table I to the exclusion of the vulcanization agents and the zinc oxide, reaching a fill factor of between 66-72%.

The mixer was operated at a speed of 40-100 revolutions/minute, and the mixture thus formed was discharged once a temperature of 140-170°C had been reached.

### (2^{nd} mixing step)

The mixture thus obtained was processed once again in a mixer operated at a speed of between 40-60 revolutions/minute. Subsequently, once the compound reaches a temperature of between 130-150°C it is discharged.

### (final mixing step)

The vulcanization agents and zinc oxide were added to the mixture obtained from the previous step, reaching a fill factor of between 63-67%.

The mixer was operated at a speed of 20-40 revolutions/minute, and the mixture thus formed was discharged once a temperature of 100-110°C had been reached.

Table I shows the compositions in phr of the compounds of the examples.

**TABLE I**

| | Tread compound of pneumatic tyres A and C | Tread compound of pneumatic tyres B and D |
|---|---|---|
| S-SBR | -- | 50 |
| NR | 60 | 50 |
| BR | 40 | -- |
| Carbon black | 50 | 15 |
| Silica | -- | 35 |
| ZnO | 2 | 2 |
| Stearic acid | 3.5 | 3.5 |
| Sulfur | 0.95 | 0.95 |
| Accelerant | 1.05 | 2.25 |

S-SBR is a polymer base obtained by means of a solution polymerization process with an average molecular weight respectively of between 500×10³ and 1500×10³, with a styrene content of between 20 and 45%.

NR is a 1,4-cis-polyisoprene rubber of natural origin.

BR is a butadiene rubber with a 1,4-cis content of at least 40%.

The carbon black used is the N134 type.

The silica used is marketed under the name VN3 by the company EVONIK and has a surface area of about 170 m²/g.

The vulcanization accelerant used is cyclohexyl-benzothiazyl-sulfenamide (CBS).

The different quantity of accelerant used in the various compounds derives from the different quantity of silica used. As is known to a person skilled in the art, the presence of silica modifies the rheological characteristics of the resulting compound, thus requiring the quantity of silica used to be adapted accordingly.

The treads of the four respective TBR pneumatic tyres A - D were manufactured using the compounds listed above. As mentioned above, the tread of the pneumatic tyres A and B have a design with slip characteristics that are greater than those of the present invention, while the treads of the pneumatic tyres C and D have a design with slip characteristics according to the present invention.

The pneumatic tyres A - D were subjected to a series of tests in order to evaluate the properties relating to the rolling resistance, the wet grip and the wear resistance.

The wear resistance was measured in accordance with the ISO 4649 standard and was further confirmed by means of the direct comparison of some standard pneumatic tyres against some pneumatic tyres according to the invention by means of Field testing, using a truck, nominally loaded and running for 24 hours a day over a fixed route, representative of the application of the pneumatic tyre itself.

The rolling resistance and wet grip were measured according to both the ISO 4664 standard and the ECE R117.02 standard. In particular, as is known to a person skilled in the art, these parameters are evaluated as a function of the relative values of tan5.

Furthermore, a "pneumatic tyre durability" test was performed wherein the evaluation thereof was exclusively visual. The test provided for the counting of the number of cracks and/or damages due to the loss of compound on the tread itself after the pneumatic tyre wear test on the road.

Table II lists the results obtained from the above tests. The results are expressed in indexed form on the basis of the results obtained from the pneumatic tyre A which represents a TBR pneumatic tyre commonly used today.

**TABLE II**

| | A | B | C | D |
|---|---|---|---|---|
| Wet grip | 100 | 110 | 85 | 115 |
| Rolling resistance | 100 | 110 | 103 | 113 |
| Wear resistance | 100 | 90 | 115 | 110 |
| Pneumatic tyre durability | 100 | <100 | >100 | 100 |

As would appear to be evident from the data reported in Table II, the pneumatic tyre according to the present invention (D) is able to guarantee, compared to the current technology, improvements in terms of rolling resistance without, for this reason, adversely affecting the wear resistance and durability of the pneumatic tyre.

It should be highlighted how only the design according to the invention (pneumatic tyre C) or only the compound according to the invention (pneumatic tyre B) are unable to guarantee the advantages in terms of rolling resistance, wear resistance and the durability of the pneumatic tyre that were sought.

In particular, the synergistic effect should be highlighted between the tread design and the composition of the compound in terms of rolling resistance and wet grip. In fact, the rolling resistance and wet grip values in relation to the pneumatic tyre D are greater those relating to both the comparison pneumatic tyre C (the only design according to the invention) and those in relation to the comparison pneumatic tyre B (the only compound according to the invention).

## Claims

1. "Truck and Bus radial" (TBR) pneumatic tyre of a driving wheel, comprising a tread manufactured with a compound comprising a cross-linking unsaturated chain polymer base comprising from 40 to 80% by weight of a styrene-butadiene rubber (SBR), a filler comprising from 40 to 80% by weight of silica and a vulcanization system, **characterized in that** said tread has a design such as to give an average tread slip of less than 0.5 mm and a slip range for the tread points of between 0.07 mm and 1.17 mm; these slip parameters being measured under the condition of a rolling speed of 0.012 Km/h, of a vertical load equal to the nominal load of the pneumatic tyre, of torque in Nm equal to half of the nominal load of the pneumatic tyre, of lateral slip angles and camber angles equal to zero; said design comprising, within a central portion thereof, a plurality of regular and/or irregular hexagons arranged therebetween with parallel edges and at a distance (A) of between 1.0 mm and 2.0 mm; each of the regular and/or irregular hexagons having a length (B) of between 60 mm and 80 mm, and being transversely divided in half by a shaped groove with a thickness (C) of between 0.4 mm and 0.7 mm.

2. TBR pneumatic tyre according to claim 1, **characterized in that** the cross-linkable unsaturated chain polymer base comprises from 50 to 70% by weight of a styrene-butadiene rubber (SBR).

3. TBR pneumatic tyre according to claim 1 or 2, **characterized in that** the filler comprises from 50 to 70% by weight of silica.

4. TBR pneumatic tyre according to one of the preceding claims, **characterized in that** the polymer base comprises natural rubber.

5. TBR pneumatic tyre according to one of the preceding claims, **characterized in that** the filler comprises carbon black.

## Patentansprüche

1. "Radialluftreifen für Lastkraftwagen und Busse" (TBR) eines Antriebsrad, umfassend eine Lauffläche, die mit einer Mischung hergestellt ist, umfassend eine vernetzende ungesättigte Polymerkettenbasis, umfassend von 40 bis 80 Gew.-% einen Styrol-Butadien-Kautschuk (SBR), einen Füllstoff, umfassend von 40 bis 80 Gew.-% Kieselerde, und ein Vulkanisationssystem,
**dadurch gekennzeichnet, dass** die Lauffläche eine derartige Gestaltung aufweist, dass sie einen mittleren Laufflächenschlupf von weniger als 0,5 mm und einen Schlupfbereich für die Laufflächenpunkte zwischen 0,07 mm und 1,17 mm aufweist; wobei diese Schlupfparameter unter der Bedingung einer Rollgeschwindigkeit von 0,012 km/h, einer vertikalen Last, die der Nennlast des Luftreifens entspricht, eines Drehmoments in Nm, das der Hälfte der Nennlast des Luftreifens entspricht, von Seitenschlupfwinkeln und Sturzwinkeln gleich Null gemessen werden; die Gestaltung umfassend, innerhalb eines mittleren Abschnitts davon, eine Vielzahl regelmäßiger und/oder unregelmäßiger Sechsecke, die mit parallelen Kanten und in einem Abstand (A) zwischen 1,0 mm und 2,0 mm dazwischen angeordnet sind; jedes der regelmäßigen und/oder unregelmäßigen Sechsecke eine Länge (B) zwischen 60 mm und 80 mm aufweist und durch eine geformte Nut mit einer Dicke (C) zwischen 0,4 mm und 0,7 mm quer in zwei Hälften geteilt sind.

2. TBR-Luftreifen nach Anspruch 1, **dadurch gekennzeichnet, dass** die vernetzbare ungesättigte Polymerkettenbasis von 50 bis 70 Gew.-% einen Styrol-Butadien-Kautschuk (SBR) umfasst.

3. TBR-Luftreifen nach Anspruch 1 oder 2, **dadurch gekennzeichnet, dass** der Füllstoff von 50 bis 70 Gew.-% Kieselsäure umfasst.

4. TBR-Luftreifen nach einem der vorstehenden Ansprüche,
**dadurch gekennzeichnet, dass** die Polymerbasis Naturkautschuk umfasst.

5. TBR-Luftreifen nach einem der vorstehenden Ansprüche, **dadurch gekennzeichnet, dass** der Füllstoff Ruß umfasst.

## Revendications

1. Pneumatique « radial pour camion et autobus » (TBR) d'une roue motrice, comprenant une bande de roulement fabriquée avec un composé comprenant une base polymère de chaîne insaturée de réticulation comprenant de 40 à 80 % en poids d'un caoutchouc styrène-butadiène (SBR), une charge comprenant de 40 à 80 % en poids de silice et un système de vulcanisation, **caractérisé en ce que** ladite bande de roulement a une conception telle qu'elle donne un glissement moyen de bande de roulement inférieur à 0,5 mm et une plage de glissement pour les points de bande de roulement comprise entre 0,07 mm et 1,17 mm ; ces paramètres de glissement étant mesurés dans la condition d'une vitesse de roulement de 0,012 Km/h, d'une charge verticale égale à la charge nominale du pneumatique, d'un couple en Nm égal à la moitié de la charge nominale du pneumatique, d'angles de glissement latéral et d'angles de carrossage égaux à zéro ; ladite conception comprenant, au sein d'une partie centrale de celle-ci, une pluralité d'hexagones réguliers et/ou irréguliers agencés entre eux avec des bords parallèles et à une distance (A) comprise entre 1,0 mm et 2,0 mm ; chacun des hexagones réguliers et/ou irréguliers ayant une longueur (B) comprise entre 60 mm et 80 mm, et étant transversalement divisé en moitiés par une rainure profilée avec une épaisseur (C) comprise entre 0,4 mm et 0,7 mm.

2. Pneumatique TBR selon la revendication 1, **caractérisé en ce que** la base polymère réticulable à chaîne insaturée comprend de 50 à 70 % en poids d'un caoutchouc styrène-butadiène (SBR).

3. Pneumatique TBR selon la revendication 1 ou 2, **caractérisé en ce que** la charge comprend de 50 à 70 % en poids de silice.

4. Pneumatique TBR selon l'une des revendications précédentes, **caractérisé en ce que** la base polymère comprend du caoutchouc naturel.

5. Pneumatique TBR selon l'une des revendications précédentes, **caractérisé en ce que** la charge comprend du noir de carbone.
